# NEW EUROPEAN PATENT SPECIFICATION

(11) **EP 0 553 958 B2**
(45) Date of publication and mention of the opposition decision: **06.08.2003**
(45) Mention of the grant of the patent: 25.09.1996
(21) Application number: 93300155.4
(22) Date of filing: 11.01.1993
(51) Int. Cl.: A21C 11/10

(54) **Cutting apparatus for bar shaped plastic food**
Schneidgerät für stabförmige, plastische Nahrungsmittel
Appareil pour couper les aliments plastiques en forme de barres

(30) Priority: 30.01.1992 JP 4218392
(43) Date of publication of application: 04.08.1993
(73) Proprietor: KOBIRD CO., Ltd., Fukui-shi, Fukui-ken (JP)
(72) Inventor: Kobayashi, Masao, Fukui-shi, Fukui-ken (JP)
(74) Representative: Pearce, Anthony Richmond

(56) References cited:
- EP-A- 0 430 396
- EP-A- 0 450 746
- EP-A- 0 455 394

## Description

The present invention relates to a cutting apparatus for bar shape plastic food which is suitable for cutting various plastic foods such as double layered, enveloped food materials extruded from the extrusion apparatus.

Plastic food materials are difficult to cut due to their high ductility and viscoelasticity. A large quantity of the food material has to be kneaded and then cut to small sizes in order to produce the food efficiently. A known method for mechanically cutting a plastic food material bar comprises continuously extruding the food material between several pieces of shutter which are arranged on a polygonal circumference, and while the food material is extruded through an area enclosed by the pieces of shutter, the food material is cut by sliding each piece of shutter straight toward a center of the polygon (refer to Japanese Utility Model Publication No 29433 of 1988 and Japanese Patent Publication No 42652 of 1989). This method had the demerit of having a complicated support mechanism for the pieces of shutter and a complicated mechanism for transmission of movement to each piece of shutter, the shutter pieces having to slide simultaneously, each shutter piece sliding in a different direction to the other shutter pieces.

In contrast, the present invention allows the cutting apparatus to cut the plastic food material such as a multi-layered material beautifully without adopting the complicated mechanism for sliding each piece of shutter straight in all directions at once.

According to the present invention there is provided an apparatus for cutting food comprising a cutter having four shutter pieces, each of the shutter pieces having a contact tip and a cutter side, wherein the contact tip of each shutter piece is arranged to contact and to cony form with the shape of the cutter side of an adjacent one of the four shutter pieces, the shutter pieces defining therebetween a throttle cutting area, the shutter pieces being arranged to open and close said throttle cutting area with the contact tip of each shutter piece contacting the cutter side of an adjacent shutter piece to cut the plastic food material, in use, a drive mechanism for driving each of the shutter pieces to open and close the throttle cutting area, a cutter raising/lowering mechanism for raising and lowering the cutter, an extrusion nozzle arranged to extrude plastic food material through said throttle cutting area, a table for receiving food from the cutter, in use, the table being arranged to be raised and lowered by a table raising/lowering mechanism and characterised by the table raising/lowering mechanism comprising a cam and a rod, a drive mechanism for driving the table raising/lowering mechanism and the cutter raising/lowering mechanism, the drive mechanism comprising a motor and endless transmission means for transmitting power from the motor to the table raising/lowering mechanism and the cutter raising/lowering mechanism, the table and the cutter being arranged to be lowered at the same speed as the speed of extrusion of the food material, in use, and wherein the shutter pieces are pivotable to open and close the throttle cutting area, the cutter side of each shutter piece extending from the contact tip thereof towards the pivot axis of the shutter piece, the pivot axis being spaced from the contact tip.

The invention will further be described, by way of example, with reference to the accompanying drawings, in which:-
Figure 1 is a view of a cutting apparatus;
Figure 2 is a perspective view of a shutter piece;
Figure 3 is a view similar to Figure 2 of an alternative shutter piece;
Figures 4 to 9 are plan views illustrating operation of the shutter pieces; and
Figures 10 to 15 are schematic diagrams illustrating the cutting of double layered food material using the shutter pieces of Figures 2 and 3.

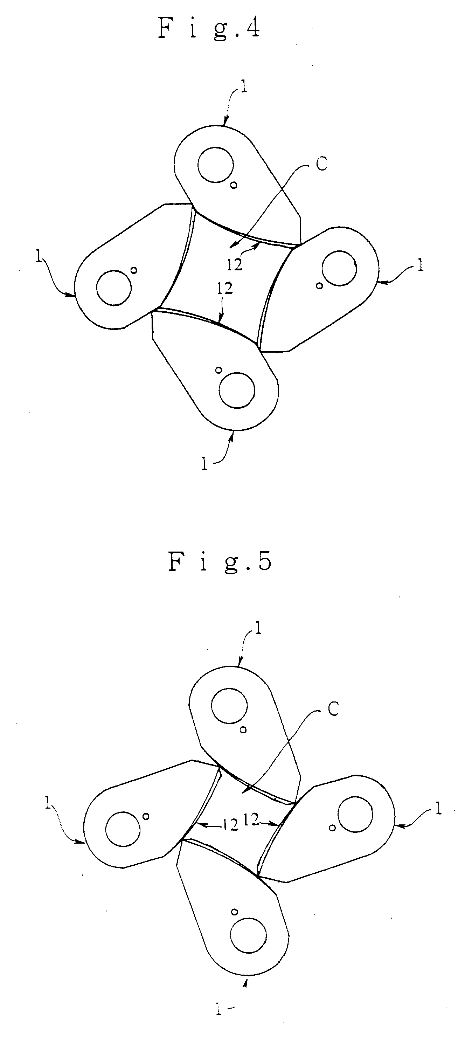

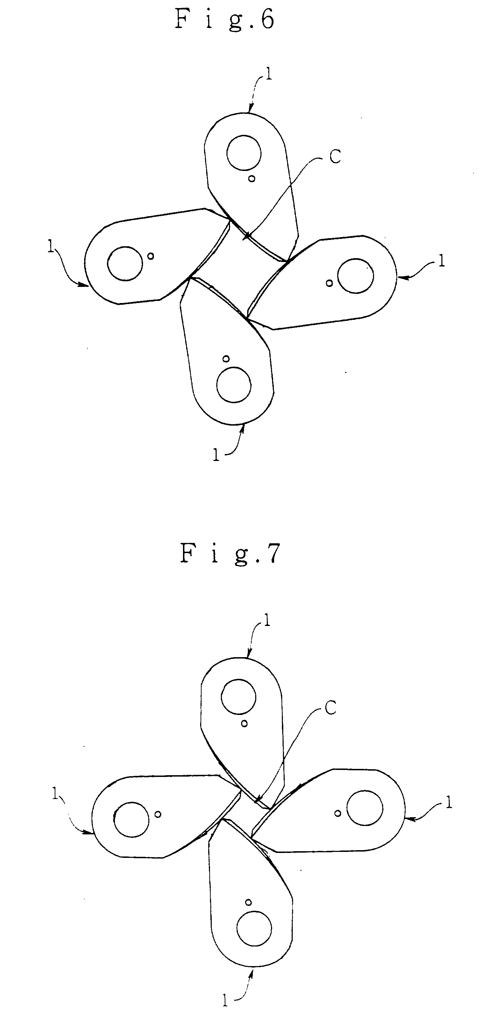

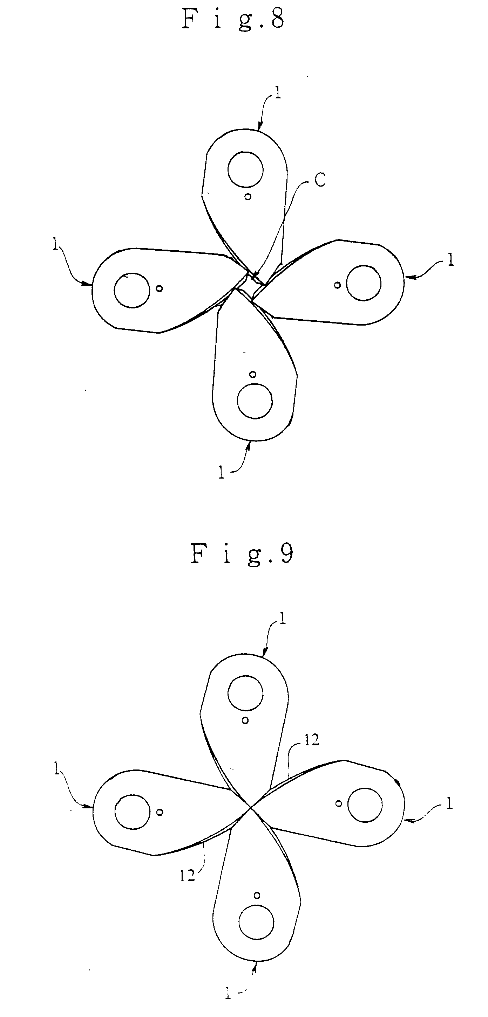

Figures 4 to 9 show the structure of the shutter pieces of the food cutting apparatus according to an embodiment of the invention. In the embodiment, four shutter pieces (1c) of identical shape are pivotally mounted at each vertex of a virtual square, thus, located circumferentially. Each shutter piece includes a contact tip (11) and a cutter side (12) extending from the contact tip (11) towards the pivot axis, the cutter side (12) being of convex shape. Each of the shutter pieces is driven by a motor (2). The contact tip (11) of each shutter piece is always in contact with the cutter side (12) of the adjacent shutter piece. During pivotal movement of the shutter pieces, the contact tip (11) is always remains in contact with the cutter side (12) of the adjacent shutter piece, and thereby defines a throttle cutting area (C) of approximately square shape. Since the throttle cutting area (C) opens and shuts by the pivot movement of each shutter piece, a double layer food material (described later) extruded through the throttle area (C) can be cut. Each shutter piece has a proper thickness and the food material is cut by squashing the food material with the cutter side instead of cutting into the food material with a sharp edge.

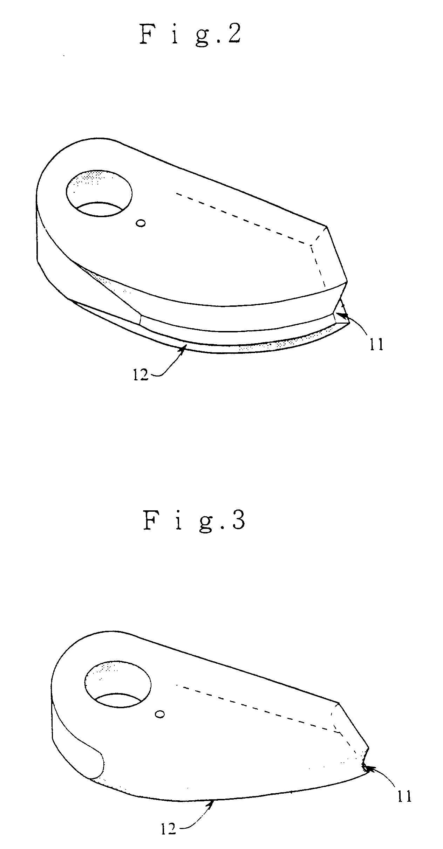

In the embodiment illustrated in Figure 2, the contact tip (11) is provided with a flat bottomed 'V' shaped groove, the cutter side (12) being similarly shaped so as to conform therewith. The shutter piece illustrated in Figure 3 differs from that of Figure 2 in that the contact tip (11) is provided with a rounded groove, the cutter side (12) being shaped so as to conform therewith.

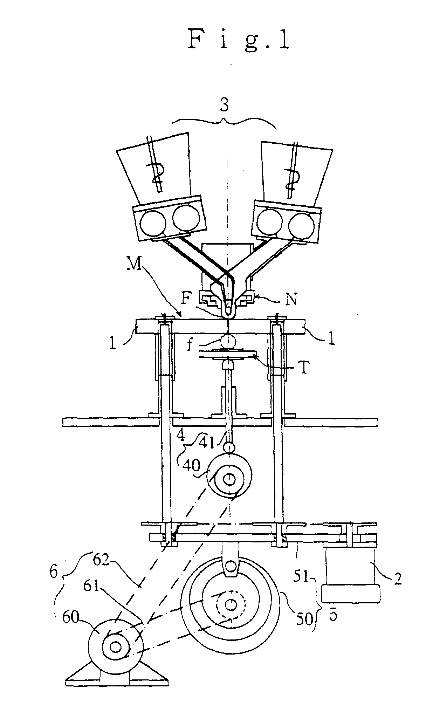

Figure 1 illustrates an apparatus for cutting food material including a cutting unit (M) including shutter pieces as described above, the cutting unit (M) being located below an extrusion nozzle (N) of an extruder (3) for extruding a double layered food material (F). A table (T) is located below the cutting unit (M), the table (T) being capable of being raised and lowered by a table raising/lowering mechanism (4) which comprises a cam (40) and a rod (41).

The cutting unit (M) is also capable of being raised and lowered by a cutter raising/lowering mechanism (5) which comprises a cam (50) and a cam follower arrangement (51) connected to the cutting unit (M).

Both the cutter raising/lowering mechanism (5) and the table raising/lowering mechanism (4) are driven by a drive mechanism (6) comprising a motor (60) and respective endless transmission means (61, 62).

Operation of the apparatus will now be described. When the throttle cutting area (C) of the unit (M) is open, double layer bar shape food material (F) is continuously extruded from the extrusion nozzle (N) above the unit (M), the food material (F) extending through the throttle cutting area (C) until it is supported on the table (T). Next, while more food material (F) is extruded, the table (T) descends.

The table (T) is lowered at the same speed as the extruded food material (F). The cutter unit (M) is also lowered, the shutter pieces being pivotally moved to close the throttle cutting area (C). As the throttle cutting area (C) narrows gradually, the food material (F) is squeezed by the inside walls of the unit (M) and is finally cut off.

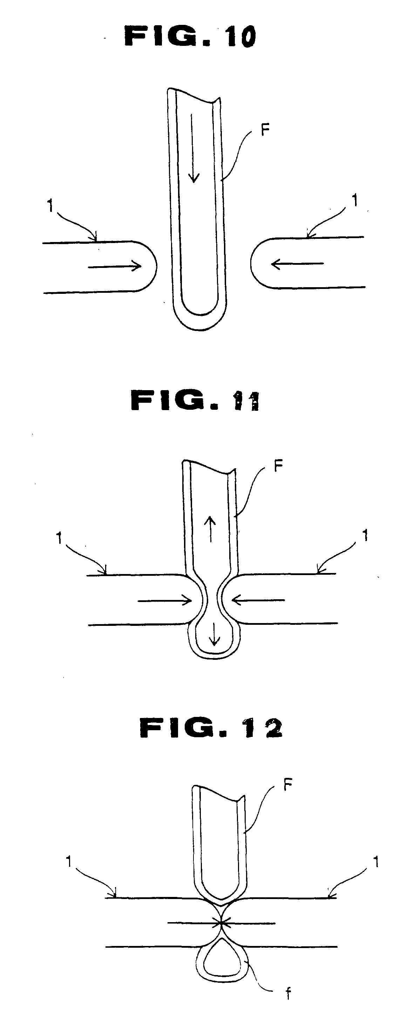

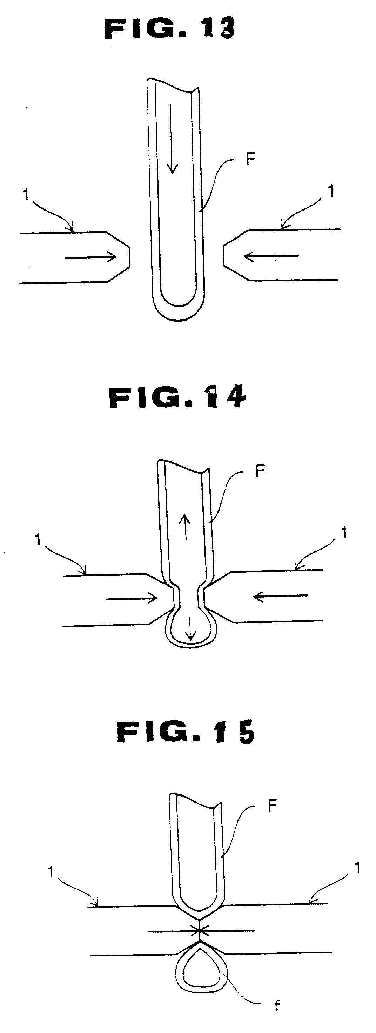

In this case, since the food material is cut by squeezing it with the cutter side of the cutting unit (M), an outer layer material is pushed into the food material and thus the outer layer material wraps both an upper cutting section and a lower cutting section. A spherical wrapped food (f) can be manufactured in a continuous operation by extruding and cutting the food material (F) with the repeated pivot movements of the pieces of shutter. This method of cutting is illustrated in Figures 10 to 15.

The vertical feed table (T) is placed so that it prevents the food material (F) from being torn off by the weight of the food material itself with an inner layer material exposed when the food material is being squeezed. The vertical motion of the cutting unit (M) can prevent the position squeezed by the cutter side from sliding over the bar shape food material. Accordingly, the table (T) descends at the same speed as the bar shape food material being extruded down when the throttle cutting area is narrowing, while the table (T) returns to an original position when the throttle cutting area is opening.

As mentioned above, the cutting apparatus for bar shaped plastic food according to the present invention has an effect of providing simpler structure than the conventional cutting apparatus because the plastic food can be cut by the pivot movement of the pieces of shutter. The present invention adopts a method for shutting the cutting area wherein the contact tip is formed on each piece of shutter and each piece of shutter is pivoted together with the contact tip of each shutter piece touching the cutter side of an adjacent shutter piece without creating openings between the pieces of shutter. As a result, the food cutting apparatus also has another effect of preventing the plastic food from clogging the food cutting apparatus by sliding the contact edge part on the cutter side thus continually self-cleaning the plastic food adhering to the cutter side.

## Claims

1. An apparatus for cutting food comprising a cutter having four shutter pieces (1), each of the shutter pieces (1) having a contact tip (11) and a cutter side (12), wherein the contact tip (11) of each shutter piece (1) is arranged to contact and to conform with the shape of the cutter side (12) of an adjacent one of the four shutter pieces (1), the shutter pieces (1) defining therebetween a throttle cutting area (C), the shutter pieces (1) being arranged to open and close said throttle cutting area (C) with the contact tip (11) of each shutter piece (1) contacting the cutter side (12) of an adjacent shutter piece (1) to cut the plastic food material, in use, a drive mechanism for driving each of the shutter pieces (1) to open and close the throttle cutting area (C), a cutter raising/lowering mechanism for raising and lowering the cutter, an extrusion nozzle arranged to extrude plastic food material through said throttle cutting area (C), a table for receiving food from the cutter, in use, the table being arranged to be raised and lowered by a table raising/lowering mechanism and **characterised by** the table raising/lowering mechanism comprising a cam and a rod, a drive mechanism for driving the table raising/lowering mechanism and the cutter raising/lowering mechanism, the drive mechanism comprising a motor and endless transmission means for transmitting power from the motor to the table raising/lowering mechanism and the cutter raising/lowering mechanism, the table and the cutter being arranged to be lowered at the same speed as the speed of extrusion of the food material, in use, and wherein the shutter pieces (1) are pivotable to open and close the throttle cutting area (C), the cutter side of each shutter piece (1) extending from the contact tip (11) thereof towards the pivot axis of the shutter piece (1), the pivot axis being spaced from the contact tip (11).

## Patentansprüche

1. Gerät zum Schneiden von Nahrungsmitteln, mit einem Cutter, der vier Verschlußteile (1) hat, wobei jedes der Verschlußteile (1) eine Kontaktspitze (11) und eine Cutterseite (12) hat, wobei die Kontaktspitze (11) jedes Verschlußteils (1) so angeordnet ist, daß sie die Cutterseite (12) eines angrenzenden der vier Verschlußteils (1) berührt und sich an die Form dieser Cutterseite anschmiegt, wobei die Verschlußteile (1) eine Drosselschneidfläche (C) zwischen sich definieren, und die Verschlußteile (1) so angeordnet sind, daß sie beim Betrieb des Gerätes die Drosselschneidfläche (C) öffnen und schließen, während die Kontaktspitze (11) jedes Verschlußteils (1) die Cutterseite (12) eines angrenzenden Verschlußteils (1) berührt, um das plastische Nahrungsmittelmaterial abzuschneiden, einem Antriebsmechanismus, um jedes der Verschlußteile (1) so anzutreiben, daß die Drosselschneidfläche (C) geöffnet und geschlossen wird, einem Cutter-Anhebe/Absenk-Mechanismus, um den Cutter anzuheben und abzusenken, einer Extrusionsdüse, die so angeordnet ist, daß plastisches Nahrungsmittelmaterial durch die Drosselschneidfläche (C) extrudiert wird, einem Tisch, um beim Betrieb des Gerätes Nahrungsmittel von dem Cutter aufzunehmen, wobei der Tisch so angeordnet ist, daß er durch einen Tisch-Anhebe/Absenk-Mechanismus angehoben und abgesenkt wird, und **dadurch gekennzeichnet ist, daß** der Tisch-Anhebe/Absenk-Mechanismus eine Nocke und einen Stab, und einen Antriebsmechanismus zum Antreiben des Tisch-Anhebe/Absenk-Mechanismus und des Cutter-Anhebe/Absenk-Mechanismus aufweist, wobei der Antriebsmechanismus einen Motor und endlose Übertragungsmittel aufweist, um Kraft von dem Motor nach dem Tisch-Anhebe/Absenk-Mechanismus und dem Cutter-Anhebe/Absenk-Mechanismus zu übertragen, wobei der Tisch und der Cutter so angeordnet sind, daß sie beim Betrieb des Gerätes mit der gleichen Geschwindigkeit wie die Extrusionsgeschwindigkeit des Nahrungsmittelmaterials abgesenkt werden, und wobei die Verschlußteile (1) schwenkbar sind, um die Drosselschneidfläche (C) zu öffnen und zu schließen, wobei sich die Cutterseite jedes Verschlußteils (1) von der Kontaktspitze (11) des Verschlußteils (1) bis zu der Schwenkachse des Verschlußteils (1) erstreckt, wobei die Schwenkachse einen gewissen Abstand von der Kontaktspitze (11) hat.

## Revendications

1. Dispositif pour couper un produit alimentaire, comprenant un coupeur possédant quatre pièces de volet (1), chacune des pièces de volet (1) étant pourvue d'un bout de contact (11) et d'un côté de découpe (12), dans lequel le bout de contact (11) de chaque pièce de volet (1) est prévu pour se mettre en contact et s'adapter à la forme du côté de découpe (12) d'une pièce adjacente des quatre pièces de volet (1), les pièces de volet (1) définissant entre elles une zone de découpe à étranglement (C), les pièces de volet (1) étant prévues pour ouvrir et fermer ladite zone de découpe à étranglement (C) par mise en contact du bout de contact (11) de chaque pièce de volet (1) avec le côté de découpe (12) d'une pièce de volet (1) adjacente afin de couper le produit alimentaire malléable pendant l'utilisation, un mécanisme de commande servant à commander chacune des pièces de volet (1) afin d'ouvrir et de fermer la zone de découpe à étranglement (C), un mécanisme de soulèvement/abaissement du coupeur servant à lever et baisser le coupeur, une filière d'extrusion prévue pour extruder un produit alimentaire malléable à travers ladite zone de découpe à étranglement (C), une table servant à recevoir le produit alimentaire venant du coupeur, pendant l'utilisation, la table étant prévue pour être levée et baissée par un mécanisme de soulèvement/abaissement, et **caractérisé en ce que** le mécanisme de soulèvement/abaissement de la table comprend une came et une tige, un mécanisme de commande pour commander le mécanisme de soulèvement/abaissement de la table et le mécanisme de soulèvement/abaissement du coupeur, le mécanisme de commande comprenant un moteur et un moyen de transmission sans fin pour transmettre l'énergie du moteur au mécanisme de soulèvement/abaissement de la table et au mécanisme de soulèvement/abaissement du coupeur, la table et le coupeur étant agencés pour être abaissés à la même vitesse que la vitesse d'extrusion du produit alimentaire, pendant l'utilisation, et dans lequel on peut faire pivoter les pièces de volet (1) pour ouvrir et fermer la zone de découpe à étranglement (C), le côté de découpe de chaque pièce de volet (1) s'étendant du bout de contact (11) de la pièce vers l'axe de pivotement de la pièce de volet (1), l'axe de pivotement étant situé à distance du bout de contact (11).
